# EUROPEAN PATENT SPECIFICATION

(11) **EP 1 379 718 B1**
(45) Date of publication and mention of the grant of the patent: **22.09.2004**
(21) Application number: 02703161.6
(22) Date of filing: 17.01.2002
(51) Int. Cl.: D04H 13/00, B32B 5/26

(54) **BONDED LAYERED NONWOVEN AND METHOD OF PRODUCING SAME**
MEHRLAGIGE GEBUNDENE VLIESSTOFFE UND VERFAHREN ZUM HERSTELLEN
NON-TISSE EN COUCHES LIE ET PROCEDE DE PRODUCTION ASSOCIE

(30) Priority: 17.01.2001 US 262173 P; 27.12.2001 US 34817 P
(43) Date of publication of application: 14.01.2004
(73) Proprietor: BBA Nonwoven Simpsonville, Inc., Simpsonville, SC 29681 (US)
(72) Inventor: ABED, Jean-Claude, David, Simpsonville, SC 29680 (US); LIMBAUGH, Michael, Lee, Greer, SC 29650 (US); GELOTTE, Susannah, Dagmar, Antioch, TN 37013 (US)
(74) Representative: Corizzi, Valérie
(86) International application number: PCT/US2002/001526
(87) International publication number: WO 2002/057528

(56) References cited:
- WO-A-00/78883
- US-A- 5 308 691
- US-A- 5 804 286
- US-A- 5 952 252

## Description

### FIELD OF THE INVENTION

This invention relates to nonwoven fabrics and to the production of nonwoven fabrics. More specifically, the invention relates to the manufacture of a bonded nonwoven fabric having improved physical performance and aesthetics.

### BACKGROUND OF THE INVENTION

The physical properties and aesthetic characteristics of nonwoven fabrics can be tailored to the requirements of specific end-use applications. In certain applications where the nonwoven fabric comes into contact with the skin of a person, it is desirable for the nonwoven fabric to have aesthetically pleasing tactile characteristics, commonly referred to as softness or a "soft hand". This is ordinarily achieved by selecting a fiber composition which will give the desired softness. In a polyolefin nonwoven, for example, polyethylene fibers are known to give greater softness characteristics than polypropylene fibers. However, the use of polyethylene fibers presents processing difficulties. Polyethylene fibers have a relatively narrow working temperature range for acceptable thermal bonding and have a greater tendency to stick to the heated calender rolls used in the thermal bonding process. Additionally, the incorporation of polyethylene into the fabric for improving softness typically results in a sacrifice in other desirable properties, such as abrasion resistance. US 5804286, WO 0078883, US 605 7024 and US 530 8691 relate to bonded nonwoven fabrics, which are part of the prior art.

### SUMMARY OF THE INVENTION

The present invention addresses these and other problems and provides a nonwoven fabric having an enhanced combination of physical properties and aesthetic characteristics. The present invention also provides a manufacturing process that provides improved processing efficiency, reducing the incidence of sticking or wrap-ups on the calender roll.

Broadly, the nonwoven fabric of the present invention is of a multilayer construction and includes a first fibrous web layer which defines one outer surface of the nonwoven fabric and a second fibrous web layer which defines the opposite outer surface of the fabric. The first fibrous web layer includes bicomponent or biconstituent fibers which include both a relatively higher fusion point first polymer and a lower fusion point second polymer. The second fibrous web layer includes fibers of the relatively higher fusion point first polymer. A plurality of fusion bonds serve to bond the fibers of the first web and the fibers of the second web to form a coherent multilayer fabric. The first and second fibrous webs may be bonded directly to one another by the fusion bonds. Alternatively, one or more intermediate layers may be located between the outer first and second fibrous webs.

The first fibrous web layer is a "bico-rich" web containing from 10 to 100 percent by weight of the bicomponent or biconstituent fibers. In comparison with the first web, the second web is a "bico-lean" web. It may be formed entirely of mono-component fibers, or from a mixture of bico- and mono-component fibers. If bico fibers are present, they are in a proportion significantly less than in the bico-rich layer. Consequently, the first web has a thermal fusing temperature which is less than that of the second web.

In one specific embodiment of the present invention, the nonwoven fabric comprises a first web of carded staple fibers defining one outer surface of the fabric. A second web of carded staple fibers defines an opposite outer surface of the fabric, and a plurality of fusion bonds serves to bond to the fibers of the first web and the fibers of the second web to form a coherent multilayer fabric. The fibers of the first web include a substantially homogeneous blend of polypropylene staple fibers and polyethylene-polypropylene bicomponent or biconstituent staple fibers in which at least some of the polyethylene is present at the surface of the fibers. The fibers of the second web include polypropylene staple fibers. The fibers of the first web are a blend of polypropylene staple fibers and sheath-core bicomponent fibers in which the polyethylene component is the sheath and the polypropylene component is the core. The first web of fibers may comprise from 10 to 100 percent by weight of the sheath-core bicomponent fibers and from zero to 90 percent by weight of the polypropylene fibers, more desirably from 40 to 100 percent sheath-core bicomponent fibers and the balance polypropylene fibers. In one specific embodiment, the blend contains 50 percent bicomponent fibers and 50 percent polypropylene fibers, and the sheath-core fibers are approximately 50 percent by weight sheath and 50 percent core.

Thermal fusion bonds can be formed by passing the fibrous webs through a calender nip defined between a smooth calender roll and a patterned calender roll. On the bico-rich outer surface of the fabric, the thermal bonds exhibit a relatively non-indented configuration resulting from contact with the smooth calender roll. The thermal bonds on the opposite (bico-lean) surface of the fabric exhibit a relatively indented, embossed configuration resulting from contact with the patterned calender roll. Preferably, the temperature of the calender rolls is regulated to maintain the pattern roll at a higher temperature than the smooth calender roll. The calender rolls are run with a target temperature that is the average of the two calender rolls. The pattern roll is run 5 to 40°F (3 to 22°C), preferably 10 to 20°F (5 to 11°C) hotter than the target average temperature, and the smooth calender roll is run 5 to 40°F (3 to 22°C), preferably 10 to 20°F (5 to 11°C) cooler than the target average temperature. When the unbonded layered webs are run through the calender nip, the bico-rich layer comes into contact with the smooth calender roll, which is at a reduced temperature. The polypropylene layer comes in contact with patterned calender roll, which is operating at a significantly higher temperature than the smooth calender roll. This bonding process provides improved softness on the bicomponent-rich side of the fabric without sacrificing abrasion resistance, as compared to a conventional non-layered fabric bonded by conventional techniques.

The layered construction also improves the ability to thermally seam two or more layers of the fabric. When the bico-rich layer is thermally bonded to the bico-rich layer of another sheet of the same material, the peel strength is dramatically increased compared to the peel strength of a non-layered bicomponent counterpart. This improved bonding benefit can be realized through stronger bonding of the material to itself, or through faster processing speeds requiring less thermal energy to obtain a bond of acceptable strength.

The layered construction reduces the amount of bicomponent required to achieve a desired level of softness, thus enhancing cost effectiveness. The layered construction, combined with the temperature offset during bonding, improves processability.

### DETAILED DESCRIPTION OF THE INVENTION

The present invention now will be described more fully hereinafter with reference to the accompanying drawings, in which preferred embodiments of the invention are shown. Like numbers refer to like elements throughout.

The present invention is applicable to nonwoven fabrics formed by various traditional manufacturing processes, including carding, air laying, wet laying, meltblowing, spunbonding, and combinations of these processes. Broadly, nonwoven webs suitable for producing the nonwoven fabrics of the present invention include nonwoven webs made from fibers that are amenable to thermal fusion bonding. Fibers suitable for the present invention are produced from fiber-forming synthetic thermoplastic polymers which include, but are not limited to, polyolefins, e.g., polyethylene, polypropylene, polybutylene; polyamides, e.g., nylon 6, nylon 6/6, nylon 10, nylon 12 and the like; polyesters, e.g., polyethylene terephthalate, polybutylene terephthalate; thermoplastic elastomers; vinyl polymers; and blends and copolymers thereof. The fibers can be bonded by fusion under suitable conditions, such as under heat and pressure. In one specific embodiment, the invention relates to a layered carded thermobonded nonwoven fabric which is produced by forming first and second carded webs of staple fibers, combining the two webs, and thermally bonding the webs so that the staple fibers soften and fuse together to form a unitary structure with the first and second webs located on opposite surfaces of the bonded fabric. In other embodiments the two outer webs can be continuous fiber webs, such as spunbond webs, or one continuous fiber web and one staple fiber web.

Suitable staple fiber webs may be prepared by carding a mass of staple fibers with a carding machine or a garnetting machine. Suitable continuous fiber webs may be prepared by conventional methods, such as spunbonding. As used herein, the term "spunbonding" refers to the manufacture of "spunbond webs" formed of small diameter substantially continuous filamentary fibers by a process which involves extruding a molten thermoplastic polymer as filaments from a plurality of fine, usually circular, capillaries of a spinneret, and then rapidly drawing the filaments by pneumatic or mechanical means and randomly depositing the fibers on a collection surface to form a web. The fabrics of the present invention further include laminates of the two above-mentioned nonwoven outer webs with one or more intermediate webs or layers, such as additional carded, spunbonded or meltblown webs, or films.

The nonwoven web which is used at one outer surface of the bonded multi-layer fabric comprises a blend of first and second thermally fusible fibers of different structure and of different thermal fusion temperatures. The first fibers are formed of a relatively higher fusion point first polymer, and the second fibers are bicomponent or biconstituent fibers including a first component or constituent of a relatively higher fusion point first polymer and a second component of a lower fusion point second polymer. The second fibrous layer comprises fibers of a relatively higher fusion point first polymer.

As used herein the term "biconstituent fibers" refers to fibers which have been formed from at least two polymer components extruded from the same extruder as a blend. The polymer components form distinct phases or domains in the fiber cross section. Biconstituent fibers do not have the various polymer components arranged in uniformly positioned distinct zones across the cross-sectional area of the fiber and the various polymers are usually not continuous along the entire length of the fiber. Biconstituent fibers are sometimes also referred to as multiconstituent fibers. Fibers of this general type are discussed in, for example, U.S. Pat. No. 5,108,827 to Gessner. As used herein the term "bicomponent fibers" refers to fibers which have been formed from at least two polymers extruded from separate extruders, but combined at the spinneret to form one fiber. The polymers are arranged in distinct zones in the fiber cross section, and these zones extend substantially continuously along the length of the fiber. The polymer components may have various cross-sectional configurations, such as a sheath/core arrangement, a side-by-side arrangement, a segmented pie arrangement or various other arrangements. For certain specialized applications, the polymer components and cross-sectional configuration may be selected so that the components will split into finer fibrous or filamentary components. Bicomponent fibers are also sometimes referred to as multicomponent or conjugate fibers.

As noted above, one of the webs is formed of fibers having a relatively higher fusion temperature, which may suitably be conventional mono-component fibers. Preferably, this web is formed entirely of such fibers. However, the invention does not exclude incorporating some fibers of a lower fusion temperature, or some bicomponent and/or biconstituent fibers, so long as the overall web still has a relatively higher overall fusion temperature and can be effectively bonded by a heated calender roll. The web on the opposite surface of the fabric may be termed a "bico-rich" web, and comprises a blend of conventional mono-component fibers of a relatively higher fusion temperature and bicomponent or biconstituent fibers which have a relatively lower fusion temperature. As a result, this bico-rich web can be bonded at a lower temperature.

Since the two outer webs have differing composition, and contain fibers of different fusion temperatures, different bonding conditions can be applied to the opposite surfaces of the combined webs. Thus, the layered webs are bonded by passing through a calender nip formed between a patterned roll and a smooth roll. The bico rich web is directed into contact with the smooth roll and the opposite side, containing the higher fusing temperature fibers, contacts the patterned roll, with the patterned roll preferably being heated to a higher temperature than the smooth roll. The particular temperature differential or offset between the two rolls may be selected depending upon fiber composition, calender configuration and line speed to give desired physical and aesthetic properties. Typically the patterned roll will be operated at a temperature of from 5 to 40°F (3 to 22°C) higher than the average temperature of the two rolls, and the smooth roll will be maintained at a temperature of from 5 to 40°F (3 to 22°C) below the average temperature.

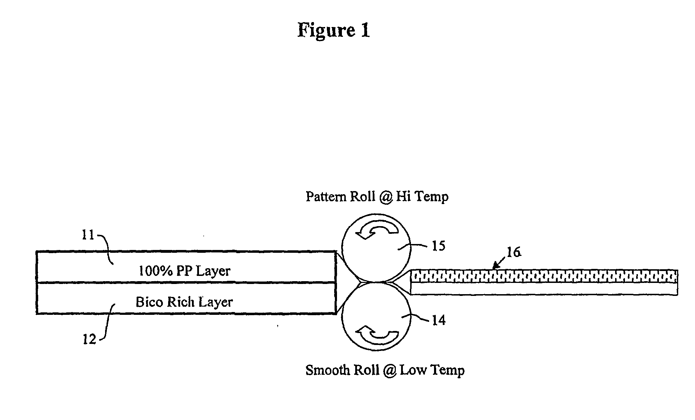

Figure 1 schematically illustrates the production of a layered nonwoven fabric in accordance with one specific embodiment of the present invention. Conventional textile carding machinery is employed to form a first carded web **11** formed of 100 percent polypropylene staple fibers. The fibers typically are from about 1 to 12 denier per filament (1.1 to 13.3 dtex per filament) and have a staple length of from about 1 to about 2 1/2 inches (2.5 to 6.4 cm). The web **11** may have a basis weight of from about 5 to about 20 grams per square meter (gsm). A second carded web **12** is formed by processing a blend of multicomponent fibers and conventional mono-component fibers. In the illustrated embodiment, the mono-component fibers are the same polypropylene staple fibers used in the first web **11**, and the multicomponent fibers comprise bicomponent fibers of a sheath-core cross-sectional configuration, where the core component is polypropylene and the sheath component is polyethylene. The sheath component may comprise from 15 to 85 percent of the bicomponent fiber by weight, preferably 40 to 60 percent. The bicomponent fibers typically are from about 1 to 12 denier per filament (1.1 to 13.3 dtex per filament) and have a staple length of from about 1 to about 2 1/2 inches (2.5 to 6.4 cm). The web **12** may have a basis weight of from about 5 to about 20 grams per square meter (gsm).

The two carded webs **11** and **12** are brought together into opposing face-to-face relation and directed through the nip of a calender as shown in Figure 1. The two webs may be formed in separate operations or they may be formed and combined in-line from two successive carding machines. The calender includes a smooth roll **14** and a cooperating patterned roll **15** formed with any of a number of patterns standard in the industry. The patterned roll has a multiplicity of raised protrusions or lands which produce a total bond area which may typically range from about 10 percent to 40 percent of the area of the fabric. As is conventional, the two calender rolls **14, 15** are capable of being heated, typically by circulating steam or other heat transfer fluid through the rolls. According to the process of the present invention, the rolls are preferably heated to different temperatures. More specifically, the patterned roll **15** is heated to a higher temperature than the smooth roll **14**. The target temperature of the bonding nip is the average of the surface temperature of the two calender rolls. The pattern roll is run 10° to 15° F (5 to 9°C) hotter than the target average temperature, and the smooth calender roll is run 10° to 15° F (5 to 9°C) cooler than the target average temperature.

As seen from Figure 1, the bicomponent-rich layer **12** is oriented so that it comes into contact with the smooth calender roll **14**, while the all polypropylene fiber layer **11** is oriented to come into contact with the patterned roll **15**. After passing through the calender nip, the first and second carded webs **11,12** are intimately bonded to one another by a multiplicity of discrete thermal bonds sites to form a unitary thermobonded fabric **16**. The bonded fabric **16** has a relatively smooth surface on the side which contacted the smooth roll and a relatively indented or embossed patterned surface on the side which contacted the patterned roll.

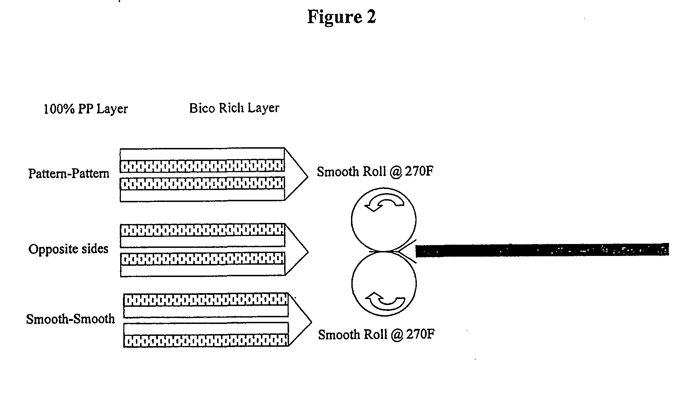

Figure 2 schematically illustrates how two layers of fabric can be joined together or seamed by passing through a heated nip. As an alternative to a heated nip, bonding may be carried out ultrasonically using a patterned ultrasonic anvil roll and a cooperating smooth roll. As shown, the two layers of fabric can be oriented either with the patterned sides facing one another, or with the patterned side of one layer facing the smooth side of the adjacent layer, or with smooth sides facing one another. Seaming the fabric together with the patterned (100 percent polypropylene) layers facing one another provides a seam strength comparable to that of conventional non-layered nonwoven fabrics. However, bonding the fabric together with the smooth, bicomponent-rich side facing the patterned side of an adjacent fabric gives improved seam strength. Dramatically improved seam strength is achieved when the fabrics are oriented with the smooth, bicomponent-rich layers facing one another.

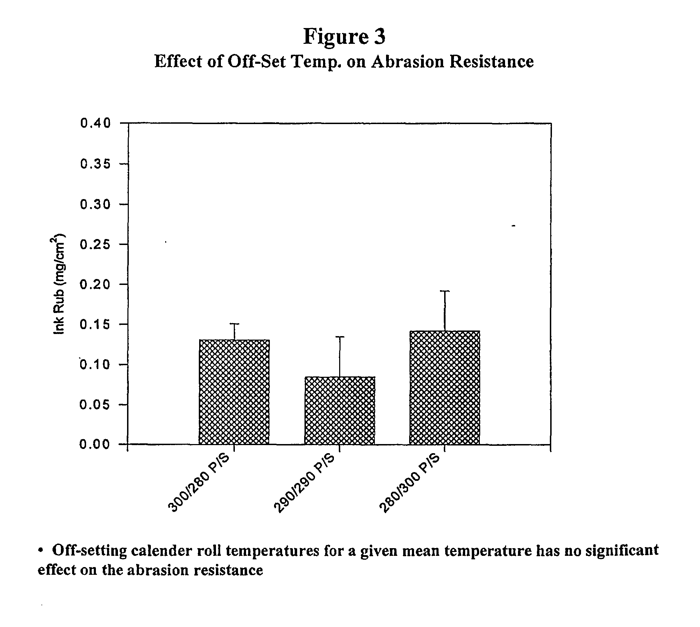

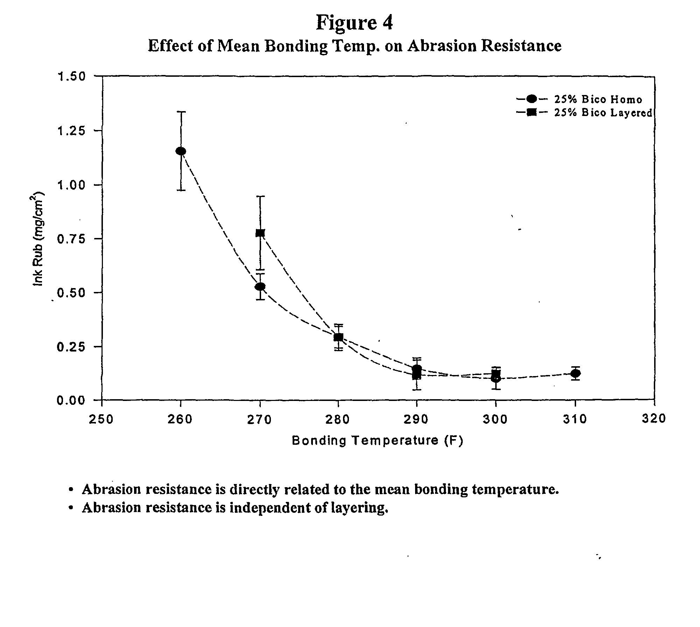

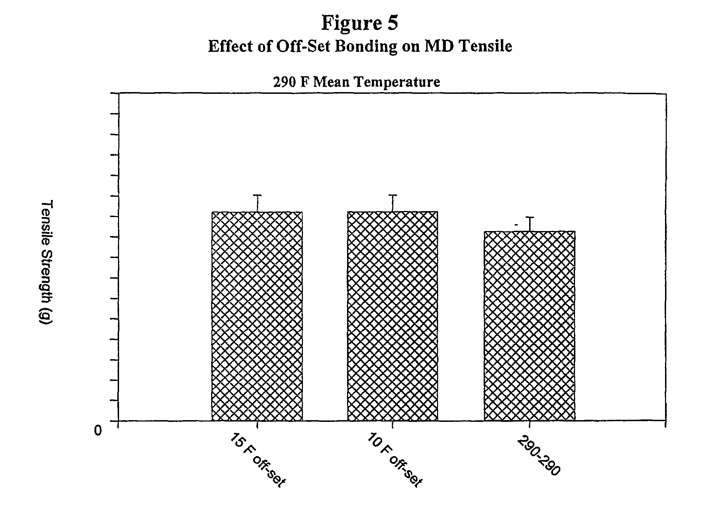

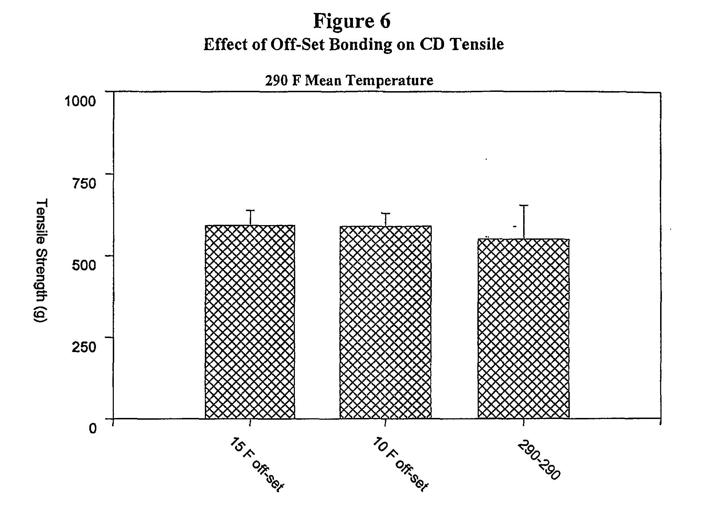

The layered structure used in accordance with the present invention makes it possible to achieve a greater perceived softness in the fabric without requiring a corresponding increase in the amount of softer (e.g., polyethylene) fibers. This is achieved by using bicomponent fibers, with the softer polymer (e.g., polyethylene) being present only in the sheath component of the fibers, and by concentrating the amount of the bicomponent fibers on one surface of the fabric where the softness properties are required. Softness is further maximized by reducing the bonding temperature on the surface of the fabric containing the bicomponent fibers. The smooth side of the fabric is maintained at a much lower bonding temperature than the patterned side and consequently the softness properties are maintained to the greatest extent possible. At the same time, abrasion resistance is maintained at an acceptable level. Ordinarily, a reduced bonding temperature results in a reduction in abrasion resistance. However, according to the present invention, it has been found that the abrasion resistance of the fabric is less dependent on the temperature of the smooth roll, and instead is a more a function of the mean bonding temperature. This relationship is shown most clearly in the graph of Figure 3. The graph of Figure 4 further shows that the abrasion resistance increases as the bonding temperature is increased, and is independent of whether the fabric is of a layered construction. Figures 5 and 6 demonstrate that the offsetting of bonding roll temperature has no adverse effect upon tensile strength in the cross direction (CD) or machine direction (MD).

### EXAMPLE

A multi-layer nonwoven carded thermobonded fabric in accordance with the present invention was produced as described below. Overall, the fabric contained 25% by weight polyethylene (PE)/polypropylene (PP) sheath-core bicomponent fibers and 75% by weight mono-component polypropylene (PP) fibers, but in a layered construction as described below. A non-layered control fabric was produced containing the same proportion of fibers in a non-layered construction. Additionally, a 100 percent polypropylene fiber control fabric was prepared.

### Multi-layer fabric of the Invention

- Bico Rich Side: 50% Bico / 50%PP
- Bico Poor Side: 100% PP
- PP Fiber is 2.6 Dtex 47.5 mm
- Bico Fiber 2.9 Dtex 47.5 mm (50% by wt. PE sheath & 50% PP Core in a concentric configuration)
- Basis Weight: 13.5 gsm for each layer
- Pattern Roll: Bond pattern with less then 20% bond area.
- Bonding conditions:
   305°F (151°C) pattern roll
   275°F (135°C) smooth roll

### 100% PP Control sample:

- Bico Rich Side: 100% PP
- Bico Poor Side: 100% PP
- PP Fiber is 2.6 Dtex 47.5 mm
- Basis Weight: 13.5 gsm for each layer
- Pattern Roll: Bond pattern with less than 20% bond area.
- Bonding conditions:
   290°F (143°C) pattern roll
   290°F (143°C) smooth roll

### 25% Bico Homogeneous Control Sample

- Bico Rich Side: 25% Bico / 25%PP
- Bico Poor Side: 25% Bico / 25%PP
- PP Fiber is 2.6 Dtex 47.5 mm
- Bico Fiber 2.9 Dtex 47.5 mm (50% by wt. PE sheath & 50% PP Core in a concentric configuration)
- Basis Weight: 13.5 gsm for each layer
- Pattern Roll: Bond pattern with less then 20% bond area.
- Bonding conditions:
   290°F (143°C) pattern roll
   290°F (143°C) smooth roll

| | | | | |
|---|---|---|---|---|
| **Sample** | **ID** | **BBA Ink Rub (mg/cm**^{**2**}**)** | **BBA Softness** | **Peel Strength (N)** |
| The | 050-000 | 0.18 | 3.7 | 4.7 |
| invention | 275/305 | | | |
| 100% PP | 000-000 | 0.19 | 2.7 | 0.8 |
| Control | 290/290 | | | |
| 25% Bico | 025-025 | 0.16 | 3.0 | 1.7 |
| Homo | 290/290 | | | |
| * The differences in the Ink Rub values are not statistically significant. | | | | |

The above data show that the fabric of the invention exhibits significantly greater softness and peel strength than the controls, and has an abrasion resistance comparable to the 100% polypropylene control sample.

## Claims

1. A nonwoven fabric which comprises:
a first layer of fibers defining a first outer surface of the fabric;
a second layer of fibers defining an opposite second outer surface of the fabric; and
a plurality of fusion bonds bonding the first and second layers of fibers to one another to form a coherent multi-layer fabric;
the fibers of the first layer comprising a homogeneous blend of from 10% to 100% by weight polyethylene/polypropylene sheath-core bicomponent fibers in which the polyethylene component is the sheath and the polypropylene component is the core, and 0 to 90% by weight polypropylene fibers;
the fibers of the second layer comprising polypropylene fibers and being selected such that said first layer of fibers has a thermal fusing temperature which is lower than that of the second layer;
wherein said bonds are formed by passing the fabric through a calender nip defined between a smooth calender roll and a patterned calender roll with said first outer surface of the fabric oriented toward the smooth calender roll, and wherein said bonds exhibit on said first outer surface a non-indented configuration resulting from contact with said smooth calender roll, and wherein the bonds on said opposite second surface of the fabric exhibit an indented embossed configuration resulting from contact with the patterned calender roll, whereby said bonds provide improved softness on said one outer surface of the fabric without sacrificing abrasion resistance.

2. A nonwoven fabric according to claim 1, wherein said first and second layers of fibers are bonded directly to one another by said fusion bonds.

3. A nonwoven fabric according to claim 1, including at least one additional layer located between said first and second fibrous layer.

4. A nonwoven fabric according to claim 3, wherein at least one additional layer comprises meltblown microfibers.

5. A nonwoven fabric according to claim 1, wherein at least one of said first and second fibrous layers is a spunbonded web.

6. A nonwoven fabric according to claim 1, wherein the first fibrous layer comprises a blend of polypropylene monocomponent staple fibers and said polyethylene/polypropylene sheath-core bicomponent staple fibers.

7. A nonwoven fabric according to claim 1 wherein
the fibers of the first layer comprise a homogeneous blend of 50% by weight polypropylene staple fibers and 50% by weight polyethylene/polypropylene sheath-core bicomponent staple fibers; and
the fibers of the second layer comprise 100% polypropylene staple fibers.

8. An article of manufacture comprising two nonwoven fabrics according to any one of claims 1 to 7, positioned with said one outer surface thereof in opposing face-to-face contact with one another and including a zone of thermal fusion defining a seam joining the two fabrics together.

9. A method of making a nonwoven fabric comprising:
forming a first web of fibers comprising a homogeneous blend of from 10% to 100% by weight polyethylene/polypropylene sheath-core bicomponent fibers in which the polyethylene component is the sheath and the polypropylene component is the core, and 0 to 90% by weight polypropylene fibers;
forming a second web comprising polypropylene fibers;
combining said first and second webs to form a multi-layer web with said first web defining a first outer surface and said second web defining an opposite second outer surface;
directing the multi-layer web through a calender nip defined between a smooth calender roll and a patterned calender roll with said first outer surface oriented toward the smooth calender roll, and forming thermal bonds bonding the fibers of the first web and the fibers of the second web, wherein said bonds exhibit on said first outer surface a non-indented configuration resulting from contact with said smooth calender roll, and wherein the bonds on said opposite second surface of the fabric exhibit an indented embossed configuration resulting from contact with the patterned calender roll, whereby said bonds provide improved softness on said first outer surface of the fabric without sacrificing abrasion resistance.

10. A method according to claim 9, including heating the patterned roll to a higher temperature than the smooth roll.

11. A method according to claim 9, wherein the patterned roll is heated to a temperature 3 to 22 °C greater than the average temperature of the two rolls and the smooth roll is heated to a temperature 3 to 22 °C lower than the average temperature.

## Patentansprüche

1. Vliesgewebe, umfassend:
eine erste Schicht von Fasern, die eine erste äußere Oberfläche des Gewebes definieren;
eine zweite Schicht von Fasern, die eine gegenüberliegende zweite äußere Oberfläche des Gewebes definieren; und
eine Vielzahl von Schmelzverbindungen, die die erste und zweite Schicht Fasern miteinander unter Bildung eines kohärenten mehrlagigen Gewebes verbinden;
wobei die Fasern der ersten Schicht eine homogene Mischung aus 10 Gew.-% bis 100 Gew.-% Polyethylen/Polypropylen-Mantel-Kern-Zweikomponentenfasern, in denen die Polyethylenkomponente der Mantel ist und die Polypropylenkomponente der Kern ist, und 0 bis 90 Gew.-% Polypropylenfasern umfassen;
wobei die Fasern der zweiten Schicht Polypropylenfasern umfassen und derart ausgewählt sind, dass die erste Schicht der Fasern eine thermische Schmelztemperatur besitzt, die niedriger ist als die der zweiten Schicht;
wobei die Bindungen gebildet werden, indem das Gewebe durch einen Kalanderwalzenspalt, definiert zwischen einer glatten Kalanderwalze und einer gemusterten Kalanderwalze, geführt wird, wobei die erste äußere Oberfläche des Gewebes in Richtung der glatten Kalanderwalze orientiert ist und wobei die Bindungen an der ersten äußeren Oberfläche eine nicht beabsichtigte Konfiguration zeigen, die vom Kontakt mit der glatten Kalanderwalze herrührt, und wobei die Bindungen auf der gegenüberliegenden zweiten Oberfläche des Gewebes eine beabsichtigte geprägte Konfiguration zeigen, die vom Kontakt mit der gemusterten Kalanderwalze herrührt, wobei die Bindungen für eine verbesserte Weichheit an der einen äußeren Oberfläche des Gewebes sorgen, ohne an Verschleißfestigkeit zu verlieren.

2. Vliesgewebe nach Anspruch 1, wobei die erste und zweite Schicht von Fasern direkt miteinander durch die Schmelzverbindungen verbunden sind.

3. Vliesgewebe nach Anspruch 1, das mindestens eine zusätzliche Schicht enthält, die sich zwischen der ersten und der zweiten Faserschicht befindet.

4. Vliesgewebe nach Anspruch 3, wobei mindestens eine zusätzliche Schicht schmelzgeblasene Mikrofasern umfasst.

5. Vliesgewebe nach Anspruch 1, wobei mindestens eine aus der ersten und zweiten Faserschicht ein Spinngewebe ist.

6. Vliesgewebe nach Anspruch 1, wobei die erste Faserschicht ein Gemisch aus Polypropylen-Monokomponentenstapelfasern und die Polyethylen/Polypropylen-Mantel-Kern-Zweikomponentenstapelfasern umfasst.

7. Vliesgewebe nach Anspruch 1, wobei die Fasern der ersten Schicht ein homogenes Gemisch aus 50 Gew.-% Polypropylenstapelfasern und 50 Gew.-% Polyethylen/Polypropylen-Mantel-Kern-Zweikomponentenstapelfasern umfassen;
und die Fasern der zweiten Schicht 100%-Polypropylenstapelfasern umfassen.

8. Fertigungsartikel, der zwei Vliesgewebe nach einem der Ansprüche 1 bis 7 umfasst, die so positioniert sind, dass sich ihre einen äußeren Oberflächen miteinander in sich gegenüberliegendem Flächenkontakt befinden, und einen Bereich thermischer Verschmelzung enthält, der eine Naht definiert, die die beiden Fasern miteinander verbindet.

9. Verfahren zur Herstellung eines Vliesgewebes, umfassend:
Bildung eines ersten Gewebes aus Fasern, die ein homogenes Gemisch aus 10 Gew.-% bis 100 Gew.-% Polyethylen/Polypropylen-Mantel-Kern-Zweikomponentenfasern, bei denen die Polyethylenkomponente der Mantel ist und die Polypropylenkomponente der Kern ist, und 0 bis 90 Gew.-% Polypropylenfasern umfassen;
Bildung eines zweiten Gewebes, das Polypropylenfasern umfasst;
Kombinieren des ersten und zweiten Gewebes unter Bildung eines mehrlagigen Gewebes, wobei das erste Gewebe eine erste äußere Oberfläche definiert und das zweite Gewebe eine gegenüberliegende zweite äußere Oberfläche definiert;
Leiten des mehrlagigen Gewebes durch einen Kalanderwalzenspalt zwischen einer glatten Kalanderwalze und einer gemusterten Kalanderwalze, wobei die erste äußere Oberfläche in Richtung der glatten Kalanderwalze orientiert ist, und Bilden thermischer Bindungen, die die Fasern des ersten Gewebes und die Fasern des zweiten Gewebes verbinden, wobei die Bindungen an der ersten äußeren Oberfläche eine unbeabsichtigte Konfiguration zeigen, die aus dem Kontakt mit der glatten Kalanderwalze herrührt, und wobei die Bindungen an der gegenüberliegenden zweiten Oberfläche des Gewebes eine beabsichtigte geprägte Konfiguration zeigen, die vom Kontakt mit der gemusterten Kalanderwalze herrührt, wobei die Bindungen für eine verbesserte Weichheit an der ersten äußeren Oberfläche des Gewebes sorgen, ohne an Verschleißfestigkeit zu verlieren.

10. Verfahren nach Anspruch 9, das das Erwärmen der gemusterten Walze auf eine höhere Temperatur als die glatte Walze einschließt.

11. Verfahren nach Anspruch 9, wobei die gemusterte Walze auf eine 3 bis 22°C höhere Temperatur als die Durchschnittstemperatur der beiden Walzen erwärmt wird und die glatte Walze auf eine 3 bis 22°C niedrigere Temperatur als die Durchschnittstemperatur erwärmt wird.

## Revendications

1. Etoffe non tissée qui comprend :
une première couche de fibres délimitant une première surface extérieure de l'étoffe ;
une seconde couche de fibres délimitant une seconde surface extérieure opposée de l'étoffe ; et
une pluralité de liaisons par fusion liant la première et la seconde couche de fibres l'une avec l'autre pour former une étoffe multicouche cohérente ;
les fibres de la première couche comprenant un mélange homogène de 10% à 100% en poids de fibres bicomposées gaine-noyau de polyéthylène/polypropylène dans lesquelles le composant de polyéthylène est la gaine et le composant de polypropylène est le noyau, et de 0% à 90% en poids de fibres de polypropylène ;
les fibres de la seconde couche comprenant des fibres de polypropylène et étant sélectionnées de manière à ce que ladite première couche de fibres ait une température de fusion thermique qui est inférieure à celle de la seconde couche ;
dans lequel lesdites liaisons sont formées en faisant passer l'étoffe à travers un pinceur de calandre défini entre un rouleau de calandre lisse et un rouleau de calandre gravé, avec ladite première surface extérieure de l'étoffe orientée vers le rouleau de calandre lisse, et dans lequel lesdites liaisons présentent, sur ladite première surface extérieure, une configuration non dentée résultant du contact avec ledit rouleau de calandre lisse, et dans lequel les liaisons sur ladite seconde surface opposée de l'étoffe présentent une configuration dentée gaufrée résultant du contact avec le rouleau de calandre gravé, moyennant quoi lesdites liaisons confèrent une douceur améliorée à ladite surface extérieure de l'étoffe sans porter préjudice à la résistance à l'abrasion.

2. Etoffe non tissée selon la revendication 1, dans laquelle lesdites première et seconde couche de fibres sont liées directement l'une avec l'autre par lesdites liaisons par fusion.

3. Etoffe non tissée selon la revendication 1, comprenant au moins une couche supplémentaire disposée entre lesdites première et seconde couche de fibres.

4. Etoffe non tissée selon la revendication 3, dans laquelle la couche supplémentaire comprend des microfibres soufflées par fusion.

5. Etoffe non tissée selon la revendication 1, dans laquelle au moins l'une desdites première et seconde couche de fibres est un voile filé-lié.

6. Etoffe non tissée selon la revendication 1, dans laquelle la première couche de fibres comprend un mélange de fibres courtes monocomposées de polypropylène et desdites fibres courtes bicomposées gaine-noyau de polyéthylène/polypropylène.

7. Etoffe non tissée selon la revendication 1, dans laquelle les fibres de la première couche comprennent un mélange homogène de 50% en poids de fibres courtes de polypropylène et de 50% en poids des fibres courtes bicomposées gaine-noyau de polyéthylène/polypropylène ; et les fibres de la seconde couche comprennent 100% de fibres courtes de polypropylène.

8. Article manufacturé comprenant deux étoffes non tissées selon l'une quelconque des revendication 1 à 7, dont lesdites surfaces extérieures sont positionnées en contact face-à-face à l'opposé l'une de l'autre et comprenant une zone de fusion thermique délimitant une couture liant les deux étoffes ensemble.

9. Procédé pour fabriquer une étoffe non tissée comprenant :
la formation d'un premier voile de fibres comprenant un mélange homogène de 10% à 100% en poids de fibres bicomposées gaine-noyau de polyéthylène/polypropylène dans lesquelles le composant de polyéthylène est la gaine et le composant de polypropylène est le noyau, et de 0% à 90% en poids de fibres de polypropylène ;
la formation d'un second voile comprenant des fibres de polypropylène ;
la combinaison desdits premier et second voiles pour former un voile multicouche avec ledit premier voile délimitant une première surface extérieure et ledit second voile délimitant une seconde surface extérieure opposée ;
le guidage du voile multicouche à travers un pinceur de calandre défini entre un rouleau de calandre lisse et un rouleau de calandre gravé, avec ladite première surface extérieure orientée vers le rouleau de calandre lisse, et la formation de liaisons thermiques liant les fibres du premier voile et les fibres du second voile, où lesdites liaisons présentent, sur ladite première surface extérieure, une configuration non dentée résultant du contact avec ledit rouleau de calandre lisse, et où les liaisons sur ladite seconde surface opposée du tissu présentent une configuration dentée gaufrée résultant du contact avec le rouleau de calandre gravé, moyennant quoi lesdites liaisons confèrent une douceur améliorée à ladite première surface extérieure de l'étoffe sans porter préjudice à la résistance à l'abrasion.

10. Procédé selon la revendication 9 comprenant le chauffage du rouleau gravé jusqu'à une température plus élevée que celle du rouleau lisse.

11. Procédé selon la revendication 9, dans lequel le rouleau gravé est chauffé jusqu'à une température de 3°C à 22°C supérieure à la température moyenne des deux rouleaux et le rouleau lisse est chauffé jusqu'à une température de 3°C à 22°C inférieure à la température moyenne.
